## Europäisches Patentamt
## European Patent Office
## Office européen des brevets

(19)

(11) Veröffentlichungsnummer: **0 155 346**
**B1**

(12)

# EUROPÄISCHE PATENTSCHRIFT

(45) Veröffentlichungstag der Patentschrift:
**31.08.88**

(51) Int. Cl.⁴: **B 60 C 23/00**

(21) Anmeldenummer: **84109094.7**

(22) Anmeldetag: **01.08.84**

(54) **Reifendruckregelanlage.**

(30) Priorität: **10.09.83 DE 3332677**

(43) Veröffentlichungstag der Anmeldung:
**25.09.85 Patentblatt 85/39**

(45) Bekanntmachung des Hinweises auf die Patenterteilung:
**31.08.88 Patentblatt 88/35**

(84) Benannte Vertragsstaaten:
**DE FR GB IT NL SE**

(56) Entgegenhaltungen:
**DE-A-2 736 603**
**DE-A-3 317 810**
**US-A-2 634 781**

(73) Patentinhaber: **Iveco Magirus Aktiengesellschaft, Schillerstrasse 2, D-7900 Ulm/Donau (DE)**

(72) Erfinder: **Pechar, Franz, Alemannenstrasse 92, D-7910 Neu- Ulm 4 (DE)**

(74) Vertreter: **Socha, Peter, Iveco Magirus AG Postfach 2740 Schillerstrasse 2, D-7900 Ulm (DE)**

LIBER, STOCKHOLM 1988

## Beschreibung

Die Erfindung betrifft eine Reifendruckregelanlage zur Änderung des Luftdruck es in Fahrzeugreifen während der Fahrt gemäß Oberbegriff des Anspruchs 1.

Reifendruckregelanlagen der vorstehend genannten Art sind in vielen Ausführungsformen an sich bekannt, beispielsweise aus DE-PS-2 736 603. Ein Hauptproblem bei Reifendruckregelanlagen Besteht darin, daß über eine einzige Leitung die Steuer- und auch die Arbeitsvorgänge realisiert werden müssen, da die Installation eines zweiten Rotors in der Achse nicht verwirklicht werden kann. Aus diesem Grunde ist es notwendig, eine Blende zwischen Steuerventil und Reifen vorzusehen, auch wenn eine solche Drosselstelle dem Ziel der schnellen Be- und Entlüftung entgegen steht. Die Blende muß entsprechend dem höchsten Reifenregeldruck sehr klein sein. Dadurch ergeben sich bei niedrigen Regeldrücken starke Drosselungen des Luftdurchtritts und somit lange Entlüftungszeiten.

Aufgabe der Erfindung ist die Schaffung einer Reifendruckregelanlage mit Steuerventilen und Blenden in den Reifen der eingangs genannten Art, bei der mit Hilfe einfacher Mittel auch bei niederen Regeldrücken kurze Entlüftungszeiten gegeben sind.

Gelöst wird die der Erfindung zugrundeliegende Aufgabe durch die im kennzeichnenden Teil des Anspruchs 1 angegebenen Merkmale.

Des erfindungsgemäße parallel zur Blende geschaltete Zuschaltventil, das beim Absinken des Regeldrucks einen zusätzlichen Durchlaßquerschnitt freigibt, vermindert mithin bei niederen Regeldrücken starke Drosselungen des Luftdurchtritts. Mithin werden die in den meisten Einsatzfällen einer Reifendruckregelanlage vorrangigen Entlüftungszeiten verkürzt. Von besonderer Bedeutung ist dies bei großvolumigen Reifen wie bei Geländefahrzeugen, bei denen bislang lange Entlüftungszeiten auftraten.

Das Zuschaltventil kann als ein 2/2-Wegeventil aufgebaut sein.

Besonders vorteilhaft ist es jedoch, wenn das Zuschaltventil ein durch den Regeldruck beaufschlagbares druckgesteuertes Ventil ist. Es weist bevorzugt ein in Richtung Reifendruck federvorgespanntes Ventilglied auf, wobei die Federvorspannung in Öffungsrichtung des Ventils wirkt.

Zweckmäßigerweise ist das Ventilglied ein becherartiger Ventilkolben, in dem eine Druckfeder zumindest teilweise aufgenommen ist. Dadurch ergibt sich ein kompakter Aufbau. Der becherartige Ventilkolben kann durch seinen oberen Umfangsrand gegen eine Gehäusewand ventilschließend angelegt werden. Es können aber auch alternativ mantelumfangsseitig Ventilöffnungen vorgesehen sein, die je nach Axialstellung des Ventilkolbens unterschiedliche zusätzliche Durchströmungsquerschnitte freigeben. Dadurch können individuellen Regeldrücken angepaßte Drosselungsquerschnitte zugeordnet werden, so daß in jedem Betriebsfall kurze Entlüftungszeiten eingerichtet werden können.

Besonders zweckmäßig ist es, wenn die eigentliche Blende zwischen Steuerventil und Reifen im Zusatzventil integriert ist. Eine Möglichkeit einer Integration besteht, wenn der becherartige Ventilkolben einen bodenseitigen Durchlaß mit konstantem Querschnitt aufweist.

Bei einer weiteren Ausführungsform ist vorgesehen, daß das druckgesteuerte Ventil einen Ventilkolben mit einem zentralen Ventilstößelteil besitzt, der als Kegelventil ausgebildet ist. Der Ventilkolben liegt hierbei selbst nicht in Durchströmungsrichtung, vielmehr wird der Regeldruck seitlich in den Reifen eingespeist.

Eine andere Ausführungsform kennzeichnet sich dadurch, daß das Ventilglied ein Federblatt ist, das gegen eine stabile Tellerunterlage mit zentraler Öffnung ventilschließend anlegbar ist. Auch hier kann die Blende im Ventil integriert sein: Es kann die stabile Tellerunterlage beispielsweise eine seitliche Durchgangsöffnung mit konstantem Querschnitt besitzen, die unabhängig von jeder Federblattstellung freiliegt.

Ein besonders kompakter Aufbau mit einem Minimum an erforderlichen Steuerleitungen ergibt sich, wenn im Reifen Steuerventil und Zuschaltventil einschließlich Blende baulich vereinigt oder unmittelbar miteinander verbunden sind.

Die Blende kann zweckmäßigerweise einen variablen Querschnitt aufweisen, der bei höherem Regeldruck kleiner wird.

Gelöst wird die der Erfindung zugrundeliegende Aufgabe nicht nur durch das vorstehend beschriebene Zuschaltventil, sondern auch in alternativer besonders vorteilhafter Ausgestaltung durch ein Schnellöseventil, das parallel zu einer Blende geschaltet ist, welche ihrerseits vor dem Steuerventil, d. h. zwischen Steuerventil und Rotor, angeordnet ist. Beim Absinken des Regeldrucks öffnet sich in druckgesteuerter Weise das Schnellöseventil und ermöglicht eine Atmosphärenentlüftung des Druckes, wie dies im kennzeichnenden Teil des Anspruchs 13 wiedergeben ist. Durch das zusätzliche Schnellöseventil an der Nabe wird die Zeitdauer der Entlüftung des Reifens (Druckabsenkung) beträchtlich vermindert (auch im Vergleich zu den vorgenannten erfindungsgemäßen Ausführungsformen). Bischer konnte Schnellöseventile nicht eingesetzt werden, weil ohne Blendenbypass keine Druckeinsteuerung möglich war. Durch einen Blendenbypass an einem an sich bekannten Schnellöseventil wird in der Endphase der Entlüftung eine vollständige Druckangleichung herbeigeführt. Die Leitung von Relaisventil zum Steuerventil bzw. Druckhalteventil in der Nabe wird dadurch gleichzeitig als Arbeits- und als Steuerleitung verwendet. Besonderer Vorteil dieser Ausführungsform der Erfindung ist, daß für die Luftdurchführung in der Radnabe eine wesentlich kleinere Bohrung (z. B. ca. 3 mm im Durchmesser) ausreicht. Dadurch ergibt sich ein geringerer Konstruktionsaufwand durch Sonderteile.

Der Blendenquerschnitt ist auf den Druck des zu entlüftenden Volumens zusammen mit dem Schließdruck des Druckhalteventils und auf den Durchflußwiderstand der zum Relaisventil führenden Leitung (Nabe) abgestimmt.

Hat die Blende einen konstanten Querschnitt, so muß sie auf den anfangs höchsten Entlüftungsdruck abgestimmt sein.

Vorteilhaft ist es daher, eine Blende mit variablem Querschnitt nach Anspruch 14 auszubilden. Die variable Blende verkürzt die Zeitphase des Druckausgleiches, sobald das Schnellöseventil zu schließen beginnt. Die Charakteristik der Blenden-Querschnittsänderung wird beispielsweise durch die Beschaffenheit einer Membrane oder die Form eines Blenden-(Nut-)Querschnitts erzielt.

Durch die Erfindung wird mithin die Erkenntnis ausgenutzt, daß im Hinblick auf kürzere Entlüftungszeiten von Reifendruckregelanlagen nicht Drosselungsvorgänge in den feststehenden Versorgungsleitungen und beim Achsdurchgang relevant sind, vielmehr sind bauteileseitig in erster Linie Steuerventil und Verbindungsschlauch zum Reifen einschließlich vorgesehener Blenden entlüftungszeitbestimmend. Dort wird durch das erfindungsgemäße Zuschaltventil oder in alternativer Ausgestaltung durch das erfindungsgemäße Schnellöseventil Abhilfe geschaffen, da auf die Blende aus den eingangs genannten Gründen grundsätzlich nicht verzichtet werden kann.

Die Erfindung wird nachfolgend anhand von Ausführungsbeispielen unter Bezugnahme auf die Zeichnung näher beschrieben; es zeigen:

Fig. 1 ein schematisches Schaltbild eines Zuschaltventils parallel zur Blende im Reifen einer Reifendruckregelanlage,

Fig. 2 ein Ausführungsbeispiel eines Zuschaltventils in einem schematischen Axialschnitt,

Fig. 3 ein Zuschaltventil ähnlich der Fig. 2 anderer Ausführungsform,

Fig. 4 ein weiteres Zuschaltventil mit variabler Drosselung bei niederen Reifendrücken,

Figuren 5 und 6 ein Federblatt-Zuschaltventil in einem Axial- bzw. Radialschnitt,

Fig. 7 das Entlüftungsdiagramm der Zuschaltventile einschließlich Blende der Figuren 2 bis 6,

Fig. 8 ein Zuschaltventil in unmittelbarer Anordnung eines an sich bekannten Reifensteuerventils,

Fig. 9 ein schematisches Schaltbild eines Schnellöseventils parallel zur zwischen Steuerventil und Rotor angeordneten Blende am Rad eines Fahrzeugs mit einer

Reifendruckregelanlage.

Fig. 10 ein Ausführungsbeispiel einer Einheit aus Schnellöseventil und variabler Blende in einem schematischen Axialschnitt,

Fig. 11 eine der Figur 10 entsprechende andere Ausführungsform einer Einheit aus Schnellöseventil und Blende gemäß Schaltbild nach Fig. 9,

Fig. 12 ein schematisches Schaltbild einer diskreten nicht mit einen Schnellöseventil baulich vereinigten Blende zwischen Steuerventil und Rotor eines Rades.

Figuren 13, 14 und 15 eine diskrete variable Blende gemäß Schaltbild nach Fig. 12 in zwei Querschnittsansichten und einer Draufsicht auf die Membran der Blende, und

Fig. 16 ein Entlüftungsdiagramm der Schnellöseventile mit Blende gemäß den Ausführungsformen nach den Figuren 10 und 11 im Vergleich zum Stand der Technik bzw. in Vergleich zu einer Ausführungsform der ersten Erfindungsalternative.

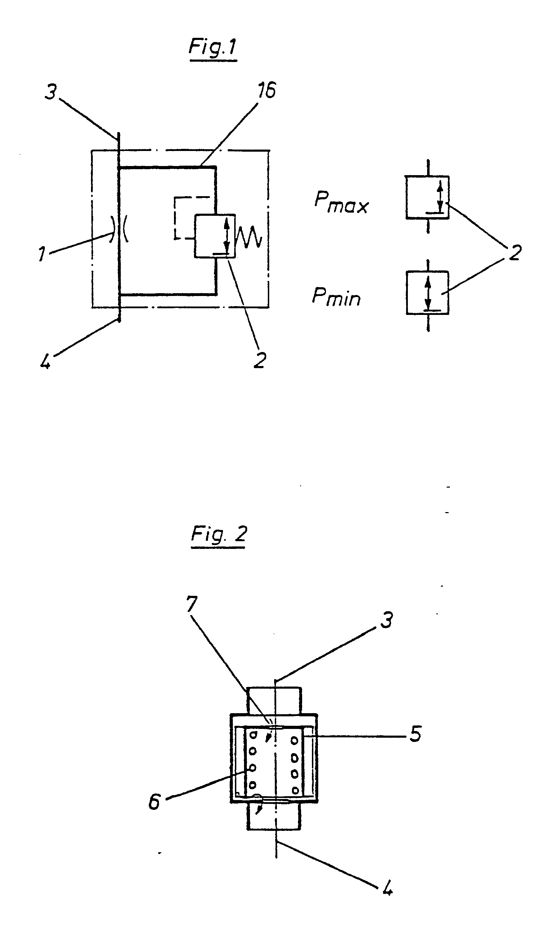

Das in Fig. 1 veranschaulichte Schaltbild betrifft einen Teil einer Reifendruckregelanlage zur Änderung des Luftdrucks in Fahrzeugreifen während der Fahrt.

Die Reifendruckregelanlage umfaßt an sich bekannte Bauelemente wie Druckluftquelle, Versorgungsleitungen, Rotoren, Steuerventile mit nachgeordneten Blenden, solwie einstellbare Regelventile mit angesteuerten Relaisventilen, die an sich bekannt und nicht veranschaulicht sind, da sie bei der vorliegenden Erfindung nicht weiter interessieren.

An den Rädern befinden sich Steuerventile, die ausgangsseitig eine Leitung 4 zu einer Blende 1 besitzen, und die Leitung 3, nach der Blende als Verbindungsschlauch zum druckzuregelnden Reifen führt.

Zur Blende 1 ist über einen Leitungszweig 16 ein Zuschaltventil 2 parallelgeschaltet, das beim Absinken des Regeldrucks einen zusätzlichen Durchlaßquerschnitt freigibt, wie dies, nachfolgend in einzelnen noch beschrieben wird. Das Zuschaltventil 2 ist als 2/2-Wegeventil ausgebildet und schaltet bei einem minimalen Regeldruck $p_{min}$ in die durchgeschaltete Stellung, während bei maximalem Regeldruck $p_{max}$ das Wegeventil gemäß Sinnbild der Fig. 1 gesperrt ist. Dadurch wird bei niederem Regeldruck ein zusätzlicher Durchströmungsquerschnitt neben dem Drosselquerschnitt der Blende 1 freigegeben, der mit einer kurzen Entlüftungszeit der Reifendruckregelanlage einhergeht.

In den Figuren 2 bis 6 sind verschiedene Ausführungsbeispiele von Zuschaltventilen 2, gezeigt.

Gemäß Ausführungsbeispiel nach Fig. 2 ist in einem rotationssymmetrischen abgestuften Ventilgehäuse ein becherartiger Ventilkolben 5 angeordnet, in dem eine Druckfeder 6 aufgenommen ist. Die Druckfeder 6 stützt sich im Innern des becherförmigen Ventilkolbens 5 auf der Bodenseite ab und drückt mit ihrem anderen Ende an eine Gehäusewand derart, daß der Ventilkolben 5 in Richtung Leitung 3 zum Reifen federvorgespannt ist.

Im Boden des Ventilkolbens 5 ist ein zentraler Durchlaß 7, der als Blende 1 des Schaltbildes nach Fig. 1 fungiert. Der offene Umfangsrand des Ventilkolbens 5 dient als Ventilschließglied des Zuschaltventils, das gegen eine Ventilgehäusewand in dichtender Weise anlegbar ist.

Im Betrieb wird bei höheren Regeldrücken die Druckfeder 6 gespannt: Der Becherrand des Ventilkolbens 5 liegt dichtend an der zugeordneten Gehäusewand an. In diesem Betriebszustand ist eine Entlüftung des Reifens ausschließlich durch den zentralen Durchlaß 7 möglich. Fällt dar Regeldruck ab, wird der Ventilkolben 5 angehoben und gibt einen umfangsseitigen zusätzlicher Strömungsquerschnitt zum Steuerventil frei. Der freigegebene zusätzliche Strömungsquerschnitt ist abhängig von der Größe des zu regelnden Drucks.

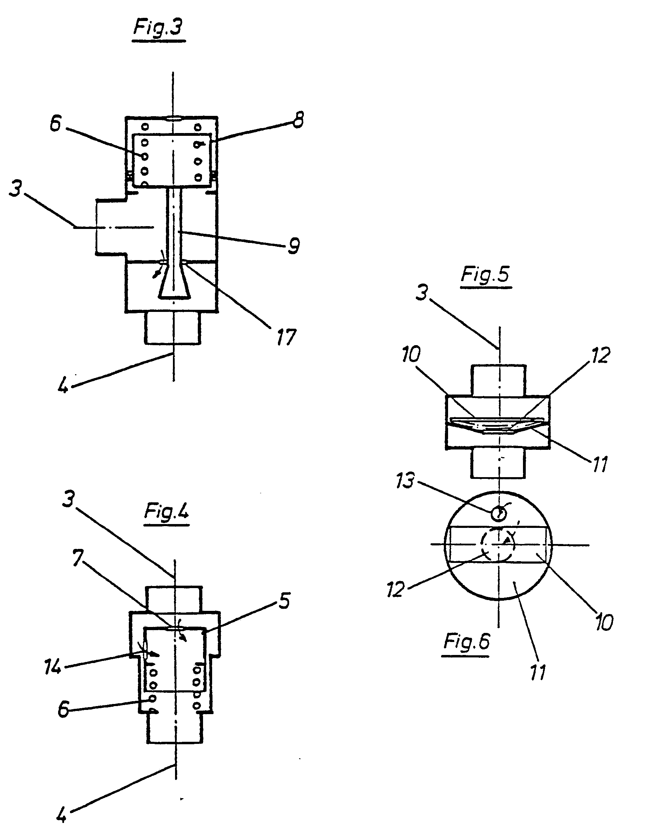

Das in Fig. 3 veranschaulichte Zuschaltventil umfaßt einen becherartigen Ventilkolben 8 mit innerer Druckfeder 6 ähnlich den Ausführungsbeispiel nach Fig. 2. Der Ventilkolben 8 besitzt ein zentrales Ventilstößelteil 9, das bei niederen Regeldrücken einen inneren Durchgang 17 freigibt, so daß ein Strömungsquerschnitt von Reifen zum Steuerventil freigegeben wird. Die Blende 1 gemäß Fig. 1 ist im Zuschaltventil 2 der Fig. 3 nicht integriert.

Das in Fig. 4 veranschaulichte Zuschaltventil umfaßt ebenfalls einen becherartigen Ventilkolben 5 mit innerer Druckfeder 6 und bodenseitigen Durchlaß 7 als Blende 1. Der Ventilkolben 5 besitzt auf seinem Mantelumfang Ventilöffnungen 14, die bei niederen Regeldrücken einen zusätzlichen Luftdurchlaß freigeben und bei höheren Regeldrücken geschlossen sind.

Auch das in den Figuren 5 und 6 veranschaulichte Ausführungsbeispiel eines Zuschaltventils besitzt eine integrierte Blende 1 in Form einer seitlichen Durchlaßöffnungen 13 in einer Tellerunterlage 11, die fest in einem rotationssymmetrischen Ventilgehäuse angeordnet ist. Die Tellerunterlage 11 besitzt eine zentrale Öffnung 12 größeren Querschnitts, die durch ein Federblatt 10, das in Richtung Reifen federvorgespannt ist, geschlossen werden kann. Im geschlossenen Zustand der zentralen Öffnung 12 liegt das Federblatt 10 ausgelenkt elastisch an der Tellerunterlage 10 ventilschliessend an.

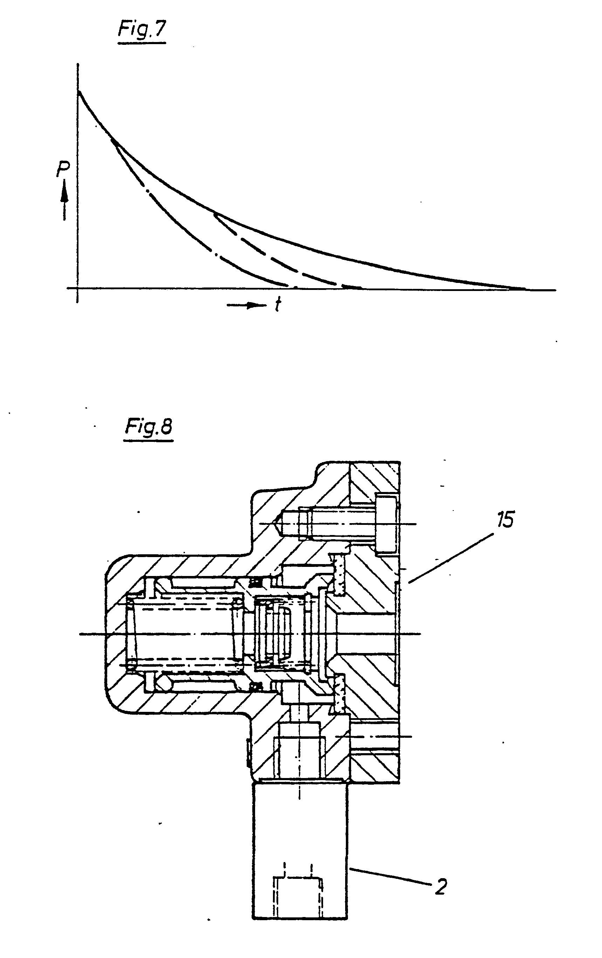

Fig. 7 zeigt das Entlüftungsdiagramm der Zuschaltventile nach den Figuren 2 bis 6, wobei der Regeldruck p über die Entlüftungszeit t aufgetragen ist. Die im Entlüftungsdiagramm ausgezogene Linie zeigt den Entlüftungsverlauf durch die Blende 1 bzw. die Öffnungen 7 und 13 der Zuschaltventile nach den Figuren 2, 4 und 5. Der Entlüftungsverlauf des eigentlichen Zuschaltventils der Fig. 2 ist durch die gestrichelte Linie angegeben, während die strichpunktierte Linie den Ventilen nach den Figuren 3 bis 6 zuzuordnen ist.

Nicht nur die Blende 1 kann im Zuschaltventil 2 integriert sein. Letzteres kann selbst baulich mit dem Steuerventil 15 des Reifens unmittelbar verbunden sein, wie dies beispielsweise in Fig. 8 gezeigt ist.

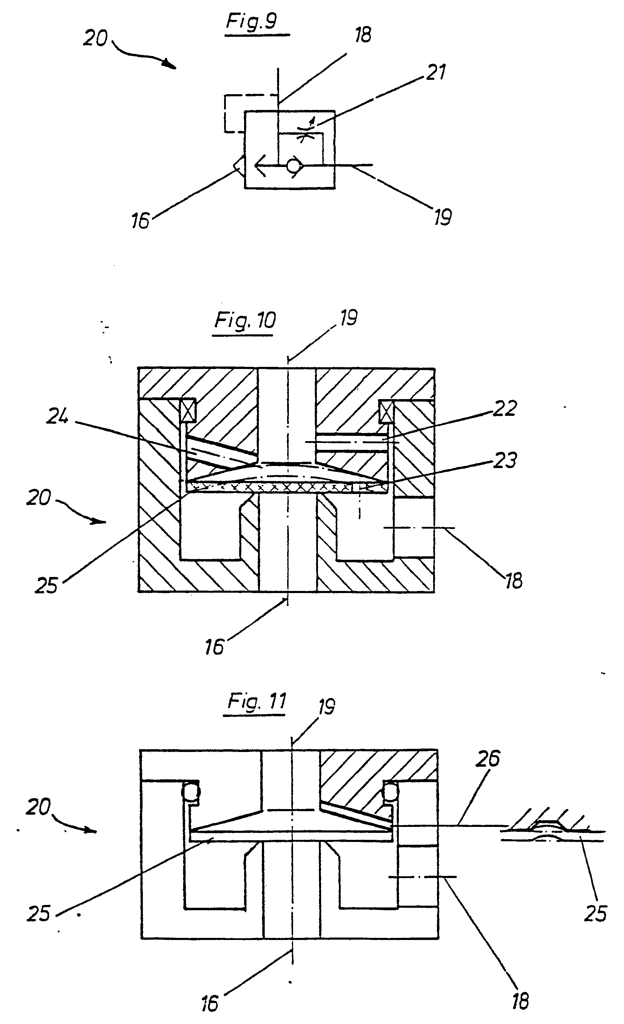

In den Figuren 9 bis 16 ist die Erfindung anhand mehrerer Ausführungsvarianten gemäß einer zweiten nebengeordneten Erfindungsalternative veranschaulicht, die grundsätzlich keine Blende zwischen Steuerventil und Reifen vorsieht, sondern eine Blende auf der anderen Seite des Steuerventils zwischen diesem und dem Relaisventilen der Radnabe aufweist. Die Blende 21 weist mithin eine Leitung 18 zum Steuerventil und eine Leitung 10 zum Rotor bzw. zum Relaisventil auf. Parallel zur Blende 2, ist ein Schnellöseventil 20 geschaltet, das eine Atmosphärenentlüftung 16 aufweist. Das Schnellöseventil 20 wird beim Absinken des Regeldrucks gesteuert, wie dies in gestrichelter Linie in Fig. 9 symbolisch gezeigt ist.

Blende 21, die einen konstanten wirksamen Querschnitt oder vorzugsweise einen variablen Querschnitt aufweist, der direkt vom Entlüftungsdruck gesteuert und mit abnehmendem Druck größer wird, sowie Schnellöseventil 20 gemäß Fig. 9 sind konstruktiv beispielsweise wie in den Figuren 10 oder 11 gezeigt aufgebaut.

Das in Fig. 10 veranschaulichte Ausführungsbeispiel einer Einheit aus Schnellöseventii 20 und variabler Blende 21 besitzt Blendendurchgänge 22 und 23 mit konstantem (beliebigen) Querschnitt. Beispielsweise kann Kreis- oder Kreisringform vorgesehen sein. Der Blendendurchgang 22 verbindet die Leitung 19 mit der Leitung 18.

Darüber hinaus besitzt das Ausführungsbeispiel nach Fig. 10 einen Blendendurchgang 23 und 24 zwischen der Leitung 19 und der Leitung 18 mit variable Querschnitt. Der variable Querschnitt wird dadurch erzielt, daß die im Schnellöseventil 20 vorgesehene elastische Membran 25 bei einer Auslenkung sich teilweise an die innere Öffnung des Blendendurchgangs 24 anlegt und dadurch den Querschnitt des Blendendurchgangs 24 bei höherem Entlüftungs- bzw. Steuerdruck verringert. Analog funktioniert der Blendendurchgang 23.

Das in Fig. 11 veranschaulichte Ausführungsbeispiel sieht für eine variable Blende eine innere Radialnut 26 auf der Steuerventilseite in Bereich der Membran 25 vor. Bei einem höheren Entlüftungsdruck wird die Membran 25 teilweise in die Radialnut 26 ein gedruckt, so daß sich deren Querschnitt verändert. In der Radialnut 26 verbleibt selbst bei maximalem Regeldruck ein freier Mindestquerschnitt, um die Blendenwirkung grundsätzlich aufrechtzuerhalten.

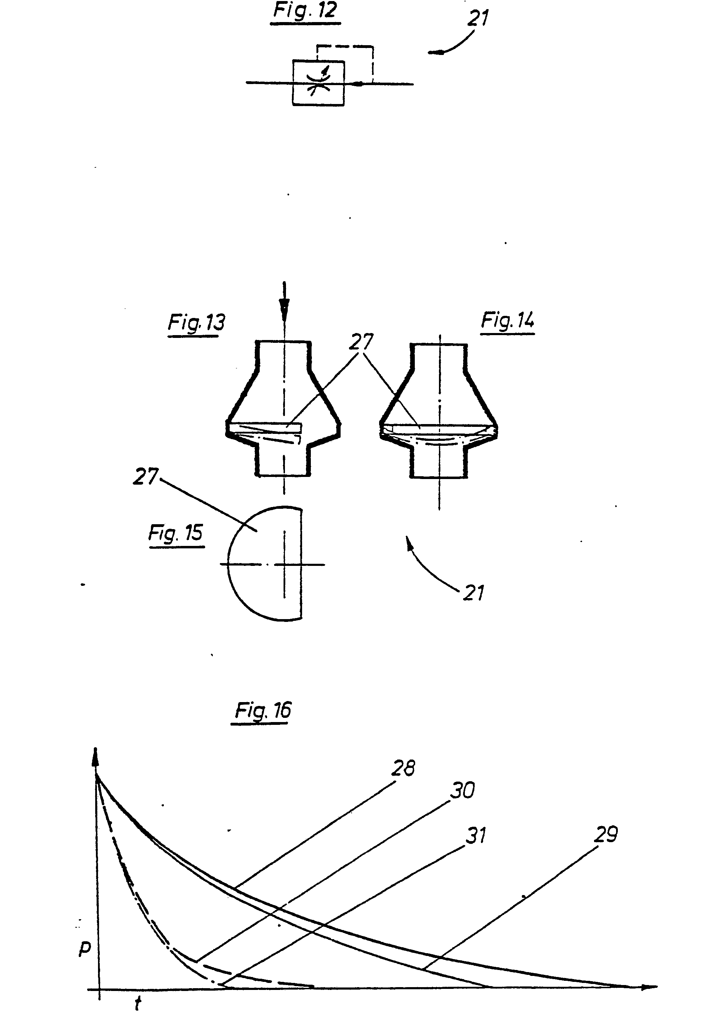

In Fig. 12 ist ähnlich der Fig. 9 ein schematisches Schaltbild einer diskreten variablen Blende 21 gezeigt, die nicht baulich mit einem Schnellöseventil vereinigt ist. Eine variable Blende dieser Art ist konstruktiv beispielsweise nach den Figuren 13, 14 und 15 ausgebildet und besitzt eine innere Auslenkmembran 27, die bei Druckveränderung unterschiedliche Durchlaßquerschnitte freigibt.

Eine variable Blende 21 als Einzelgerät kann auch nach den Figuren 5 und 6 aufgebaut sein.

Fig. 16 veranschaulicht das Entlüftungsdiagramm eines Schnellöseventils 20 mit Blende 21 in verschiedener Ausgestaltung im Vergleich zum Stand der Technik sowie im Vergleich zur ersten Erfindungsalternative, wobei der Regeldruck P über der Entlüftungszeit t aufgetragen ist. Die im Entlüftungsdiagramm ausgezogene Linie 28 zeigt den Entlüftungsverlauf nach dem Stand der Technik mit einem Steuerventil und einer Festblende zwischen Steuerventil und Reifen. Die ausgezogene Linie 29, beschreibt die verbesserte Entlüftungscharakteristik einer variablen Blende, die zwischen Steuerventil und Reifen angeordnet ist. Der Entlüftungsverlauf gemäß der gestrichelten Linie 30 charakterisiert ein erfindungsgemäßes System mit Schnellöseventil und einem Blendenbypass wie einer Festblende beispielsweise gemäß Ausführungsbeispiele nach Fig. 10 unter Weglassung des Blendendurchgangs 24. Noch bessere Entlüftungsverhältnisse werden gemäß strichpunktierter Linie 31 erzielt bei einem System mit Schnellöseventil und variabler Blende, beispielsweise nach den Figuren 10 und 11.

**Patentansprüche**

1. Reifendruckregelanlage zur Änderung des Luftdruckes in Fahrzeugreifen während der Fahrt, mit einer Druckluftquelle, die mit den Reifen über Versorgungsleitungen (3, 4) verbunden ist, in die Rotoren, Steuerventile, Blenden (1) und zumindest ein einstellbares Regelventil mit angesteuertem Relaisventil geschaltet sind, dadurch gekennzeichnet, daß parallel zur zwischen Steuerventil und Reifen angeordneten Blende (1) ein Zusatzventil (2) geschaltet ist, das beim Absinken des Regeldruckes einen zusätzlichen Durchlaßquerschnitt freigibt (Figuren 1 bis 8).

2. Reifendruckregelanlage nach Anspruch 1, dadurch gekennzeichnet, daß das Zuschaltventil (2) ein 2/2-Wegeventil ist.

3. Reifendruckregelanlage nach Anspruch 1, dadurch gekennzeichnet, daß das Zuschaltventil (2) ein durch den Regeldruck beaufschlagbares druckgesteuertes Ventil ist.

4. Reifendruckregelanlage nach Anspruch 3, dadurch gekennzeichnet, daß das Zuschaltventil (2) ein in Richtung Reifendruck federvorgespanntes Ventilglied umfaßt, wobei die Federvorspannung in Öffnungsrichtung des Ventils wirkt.

5. Reifendruckregelanlage nach Anspruch 4, dadurch gekennzeichnet, daß das Ventilglied einen becherartigen Ventilkolben (5) aufweist, in dem eine Druckfeder (6) zumindest teilweise aufgenommen ist.

6. Reifendruckregelanlage nach Anspruch 5, dadurch gekennzeichnet, daß der Ventilkolben (5) mantel umfangsseitig zumindest eine Ventilöffnung (14) aufweist (Fig. 4).

7. Reifendruckregelanlage nach Anspruch 6, dadurch gekennzeichnet, daß der Ventilkolben (5) einen bodenseitigen Durchlaß (7) als Blende mit konstantem Querschnitt aufweist.

8. Reifendruckregelanlage nach den Ansprüchen 4 bis 6, dadurch gekennzeichnet, daß das druckgesteuerte Ventil einen Ventilkolben (8) mit einem zentralen Ventilstößelteil (9) aufweist, der als Kegelventil ausgebildet ist (Fig. 3).

9. Reifendruckregelanlage nach Anspruch 4, dadurch gekennzeichnet, daß das Ventilglied ein Federblatt (10) ist, das gegen eine stabile Tellerunterlage (11) mit zentraler Öffnung (12) ventilschließend anlegbar ist (Figuren 5 und 6).

10. Reifendruckregelanlage nach Anspruch 9, dadurch gekennzeichnet, daß in der stabilen Tellerunterlage (11) eine seitliche Durchgangsöffnung (13) als Blende mit konstantem Querschnitt vorgesehen ist.

11. Reifendruckregelanlage nach einem der Ansprüche 1 bis 10, dadurch gekennzeichnet, daß das Zuschaltventil (2) baulich in das Steuerventil (15) integriert oder unmittelbar an dieses angeschlossen ist (Fig. 8).

12. Reifendruckregelanlage nach einem der Ansprüche 1 bis 10, dadurch gekennzeichnet, daß die Blende mit variablem wirksamen Querschnitt ausgebildet ist, der bei höherem Druck kleiner wird.

13. Reifendruckregelanlage zur Änderung des Luftdruckes in Fahrzeugreifen während der Fahrt, mit einer Druckluftquelle, die mit den Reifen über Versorgungsleitungen (18, 19) verbunden ist, in die Rotoren, Steuerventile, Blenden (21) und zumindest ein einstellbares Regelventil mit angesteuertem Relaisventil geschaltet sind, dadurch gekennzeichnet, daß parallel zur zwischen Steuerventil und Rotor angeordneten Blende (21) ein Schnellöseventil (20) geschaltet ist, das beim Absinken des Regeldruckes eine Atmosphärenentlüftung (16) des Druckes ermöglicht (Figuren 9 bis 15).

14. Reifendruckregelanlage nach Anspruch 1, dadurch gekennzeichnet, daß eine Blende (21) mit variablem wirksamen Querschnitt vorgesehen ist, der direkt vom Entlüftungsdruck gesteuert wird nit abnehmendem Druck größer wird.

15. Reifendruckregelanlage nach Anspruch 13 oder 14, dadurch gekennzeichnet, daß Schnellöseventil (20) und Blende (21) baulich integriert ausgebildet sind.

16. Reifendruckregelanlage nach Anspruch 15, dadurch gekennzeichnet, daß Schnellöseventil (20) und Blende (21) baulich in das Steuerventil integriert oder unmittelbar an dieses angeschlossen sind.

## Claims

1. A tyre pressure regulating system for varying, whilst travelling, the air pressure in vehicle tyres, the system comprising a compressed-air source connected to the tyres by supply pipes (3, 4) which include rotors, control valves, diaphragms (1) and at least one adjustable regulator valve with a modulated relay valve, characterized in that an auxiliary valve (2) is connected in parallel with the diaphragm (1) - arranged between each control valve and the respective tyre - and in that the auxiliary valve, in the event of a decrease of the regulation pressure, unblocks an additional valve opening area (Figs. 1 to 8).

2. A tyre pressure regulating system according to claim 1, characterized in that the auxiliary valve (2) is a 2/2-way valve.

3. A tyre pressure regulating system according to claim 1, characterized in that the auxiliary valve (2) is a pressure-controlled valve arranged to be acted upon by the regulation pressure.

4. A tyre pressure regulating system according to claim 3, characterized in that the auxiliary valve (2) comprises a valve element springbiased in the tyre pressure direction, and in that the spring bias is directed to effect opening of the valve.

5. A tyre pressure regulating system according to claim 4, characterized in that the valve element includes a cup-like valve piston (5) housing at least part of a compression spring (6).

6. A tyre pressure regulating system according to claim 5, characterized in that the shell of the valve piston (5) is provided with at least one valve port (14) (Fig. 4).

7. A tyre pressure regulating system according to claim 6, characterized in that the bottom of the valve piston (5) is provided with a discharge opening (7) operable as a diaphragm of constant cross-section.

8. A tyre pressure regulating system according to any of the claims 4 to 6, characterized in that the pressure-controlled valve is fitted with a valve piston (8) including central valve tappet part (9) which is constructed as a poppet valve (Fig. 3).

9. A tyre pressure regulating system according to claim 4, characterized in that the valve element is a spring leaf (10) which for the purpose of closing the valve is placeable against a fixed seat (11) having a central orifice (12) (Figs. 5 and 6).

10. A tyre pressure regulating system according to claim 9, characterized in that the fixed seat (11) is provided with a laterally located port (13) operable as a diaphragm of constant cross-section.

11. A tyre pressure regulating system according to any of the claims 1 to 10, characterized in that the auxiliary valve (2) is constructed so as to form an integral unit with the control valve (15) or to be directly attachable thereto (Fig. 8).

12. A tyre pressure regulating system according to any of the claims 1 to 10, characterized in that the diaphragm is constructed so as to permit variation of its effective cross-sectional area which is reduced at increased pressure.

13. A tyre pressure regulating system for varying, whilst travelling, the air pressure in vehicle tyres, the system comprising a compressed- air source connected to the tyres by supply pipes (3, 4) which include rotors, control valves, diaphragms and at least one adjustable regulator valve with a modulated relay valve, characterized in that a rapid release valve (20) is connected in parallel with the diaphragm (21) - arranged between each control valve and the respective rotor - and in that the rapid release valve, in the event of a decrease of the regulation pressure, permits venting the pressure into the atmosphere (Figs. 9 to 15).

14. A tyre pressure regulating system according to claim 13, characterized in that the effective cross-sectional area of the diaphragm (21) is variable and is controlled directly by the venting pressure, and in that the effective cross-sectional area increases with decreasing pressure.

15. A tyre pressure regulating system according to claim 13 or claim 14, characterized in that the rapid release valve (20) and the diaphragm (21) are constructed as one integral unit.

16. A tyre pressure regulating system according to claim 15, characterized in that the rapid release valve (20) and the diaphragm (21) are constructed so as to form an integral unit with the control valve or to be directly attachable thereto.

## Revendications

1. Dispositif de réglage de la pression de pneumatiques pour modifier la pression d'air dans les pneumatiques de véhicule pendant la marche, avec une source de pression qui est reliée aux pneumatiques par des conduites d'alimentation (3, 4) dans lesquels sont branchés des rotors, des soupapes de commande, des diaphragmes (1) et au moins une soupape de réglage réglable, avec une soupape à relais qui est commandée, caractérisé en ce qu'une soupape supplémentaire (2) est branchée en parallèle au diaphragme (1) disposé entre soupape de commande et pneumatique, libérant une section de passage supplémentaire en cas de chute de la pression de réglage (figures 1 à 8).

2. Dispositif de réglage de la pression de pneumatiques selon la revendication 1, caractérisé en ce que la soupape de branchement (2) est une soupape à tiroirs à 2/2

3. Dispositif de réglage de la pression de pneumatiques selon la revendication 1, caractérisé en ce que la soupape de branchement (2) est une soupape à commande par la pression, soumise à la pression de réglage.

4. Dispositif de réglage de la pression de pneumatiques selon la revendication 3, caractérisé en ce que la soupape de branchement (2) comprend un organe de soupape précontraint par un ressort, dans la direction de la pression du pneumatique, la précontrainte agissant à cette occasion dans la direction de l'ouverture de la soupape.

5. Dispositif de réglage de la pression de pneumatiques selon la revendication 4, caractérisé en ce que l'organe de soupape posséde un piston de soupape (5) en forme de godet, dans lequel un ressort de pression (6) est logé au moins partiellement.

6. Dispositif de réglage de la pression de pneumatiques selon la revendication 5, caractérisé en ce que l'enveloppe du piston de soupape (5) posséde au moins un orifice de soupape (14) à sa périphérie (figure 4).

7. Dispositif de réglage de la pression de pneumatiques selon la revendication 6, caractérisé en ce que le piston de soupape (5) posséde un passage (7) situé du côté du fond, pour diaphragme de section constante.

8. Dispositif de réglage de la pression de pneumatiques selon les revendications 4 à 6, caractérisé en ce que la soupape commandée par la pression posséde un piston de soupape (8) avec une partie de poussoir de soupape (9) centrale, qui est conçue sous forme d'une soupape conique (figure 3).

9. Dispositif de réglage de la pression de pneumatiques selon la revendication 4, caractérisé en ce que l'organe de soupape est une lame de ressort (10), qui peut s'appuyer contre un support de plateau (11) stable, avec un orifice (12) central (figures 5 et 6).

10. Dispositif de réglage de la pression de pneumatiques selon la revendication 9, caractérisé en ce qu'un orifice de passage (13) latéral est prévu comme diaphragme de section constante dans le support de plateau (11) stable.

11. Dispositif de réglage de la pression de pneumatiques selon l'une des revendications 1 à 10, caractérisé en ce que la soupape de branchement (2) est intégrée constructivement dans la soupape de commande (15) ou bien est raccordée à celle-ci de manière contigüe (figure 8).

12. Dispositif de réglage de la pression de pneumatiques selon l'une des revendications 1 à 10, caractérisé en ce que le diaphragme est exécuté en une section efficace variable, qui devient plus petite lorsque la pression 5 accroît.

13. Dispositif de réglage de la pression de pneumatiques pour modifier la pression d'air dans les pneumatiques de véhicule pendant la marche, avec une source de pression qui est reliée aux pneumatiques par des conduites d'alimentation (18, 19), dans lesquels sont branchés des rotors, des soupapes de commande, des diaphragmes (21) et au moins une soupape de réglage réglable avec une soupape à relais commandée, caractérisé en ce qu'une soupape à ouverture rapide (20) est branchée en parallèle au diaphragme (21) qui est disposé entre soupape de commande et rotor et permet une mise à l'atmosphère (16) de la pression lorsque la pression de réglage chute (figures 9 à 15).

14. Dispositif de réglage de la pression de pneumatiques selon la revendication 13, caractérise en ce qu'un diaphragme (21) de section efficace variable est prévu, qui est directement commandé par la pression de mise à l'atmosphère et qui devient plus grande lorsque la pression chute.

15. Dispositif de réglage de la pression de pneumatiques selon la revendication 13 ou 14, caractérisé en ce que la soupape à ouverture rapide (20) et le diaphragme (21) sont conçus de manière intégrée à une même structure.

16. Dispositif de réglage de la pression de pneumatiques selon la revendication 15, caractérisé en ce que la soupape à ouverture rapide (20) et le diaphragme (21) sont intégrés à une même structure à la soupape de commande, ou bien raccordés de manière contigüe à celle-ci.

*Fig.1*

$P_{max}$

$P_{min}$

*Fig. 2*

1

Fig.3

Fig.4

Fig.5

Fig.6

Fig.7

P

t

Fig.8

15

2

_Fig.9_

_Fig. 10_

_Fig. 11_

7

0 155 346

Fig. 12

*21*

Fig. 13

*27*

Fig. 14

*27*

Fig. 15

*21*

Fig. 16

*28*

*30*

*31*

*29*

$p$

$t$

9